# EUROPÄISCHE PATENTANMELDUNG

(11) **EP 3 163 478 A2**
(43) Veröffentlichungstag der Anmeldung: **03.05.2017**
(21) Anmeldenummer: 16193257.9
(22) Anmeldetag: 11.10.2016
(51) Int. Cl.: G06F 17/50

(54) **BIONISCHE PRODUKTENTWICKLUNG**

(30) Priorität: 02.11.2015 DE 102015118729
(71) Anmelder: Airbus DS GmbH, 82024 Taufkirchen (DE)
(72) Erfinder: Kocik, Rainer, 28199 Bremen (DE)
(74) Vertreter: Marschall, Stefan

(57) **Zusammenfassung**

Offenbart ist ein bionischer Entwicklungsprozess eines Bauteils, umfassend das Definieren einer Bauteilentwicklungssprache bestehend aus einem Regelwerk, welches parallel eingefügten Inputparametern entspricht, die in logische Regelprozesse übersetzt werden, wobei die Inputparameter die Anforderungen aus verschiedenen Bereiche aufweisen, das Erstellen eines Bauteilgrundmodells aus dem Regelwerk durch ein Softwaretool, das ganzheitliche Optimieren des Bauteilgrundmodells auf Grundlage von Optimierungszielsetzungen, das automatische Generieren eines Bauteilentwurfes, das Simulieren und Qualifizieren des Bauteilentwurfes und das Prüfen des Bauteilentwurfes.

## Beschreibung

Die Erfindung betrifft einen bionischen Entwicklungsprozess eines Bauteils, insbesondere einer Oberstufe einer Rakete.

In der Luft- und Raumfahrtfertigung sowie in anderen Bereiche, wie z.B. im Automobilbau, sind Produktentwicklungsprozesse, aufgrund komplexer Systemanforderungen, mit hohen Kosten und Zeitaufwand verbunden.

Die Entwicklungsprozesse spezifischer Bauteile benötigen oftmals lange und komplexe Arbeitsschritte, um den strukturellen und funktionalen Anforderung gerecht zu werden. Um die Arbeit zu vereinfachen, wird in viele Fällen der Gesamtentwicklungsprozess zwangsläufig in Prozessschritten unterteilt, die dabei separat voneinander betrachtet und optimiert werden, müssen.

Bei der Fertigung einer Oberstufe einer Rakete, spielen beispielsweise eine genaue Dimensionierung und Auslegung der strukturellen Gestaltung, der Verrohrung und der Verkabelung eine entscheidende Rolle, um ein leistungsfähiges Endprodukt zu erzielen. Im Besonderen sind im Entwicklungsprozess, die Bereiche der Struktur, der Verrohrung und der Verkabelung einer Oberstufe, von einer sequenziellen Prozesskette geprägt. Obwohl die einzelnen Entwicklungsschritte der drei Bereiche dabei parallel zueinander ablaufen können, erfolgt während der Entwicklung eine ganzheitliche Betrachtung des Prozesses erst zu einem späteren Zeitpunkt. Die Verrohrung im Bereich des operativen Triebwerks ("Functional Propulsion") wird beispielsweise erst nach dem strukturellen (Vor-) Design der Oberstufe an die bestehende Struktur angepasst. Gleiches gilt für die Verlegung der Kabelstränge. Auf die bestehende Grundstruktur werden die elektrischen Leitungen, unter Berücksichtigung der elektronischen sowie thermischen Randbedingungen, angepasst. Zudem bestehen im Bereich der Verkabelung der Oberstufe zusätzliche Randbedingungen, wie z.B. vordefinierte Halterungen für Kabelstränge oder definierte Bereiche, welche nicht als Kabelroute dienen dürfen. Andere Bereiche für Halterungen werden durch die letztendliche Kabelführung (Kabelbrücken) bestimmt. Außerdem werden bestimmte Parameter, die für die Designauslegung von Bedeutung sind, erst sehr spät im Prozess exakt festgelegt. Ein Beispiel dafür ist die Stecker-Belegung und - damit verbunden - die Kompatibilität von Kabel und Stecker, welche teilweise erst am Ende des Designprozesses bekannt sind. In Bezug auf die Kabelverlegung, ist eine schnelle Grobkalkulation der benötigten Kabellängen von hoher Bedeutung. Komponenten, welche eine lange Vorlauf- bzw. Lieferzeit benötigen, gilt es möglichst früh zu ordern. Aus diesem Grund, sind eine grobe Längenkalkulation und - damit verbunden - die groben Kabelrouten bereits nach dem PDR (Preliminary Design Review) notwendig. Dieser Schätzwert sollte im weiteren Prozess eingehalten werden.

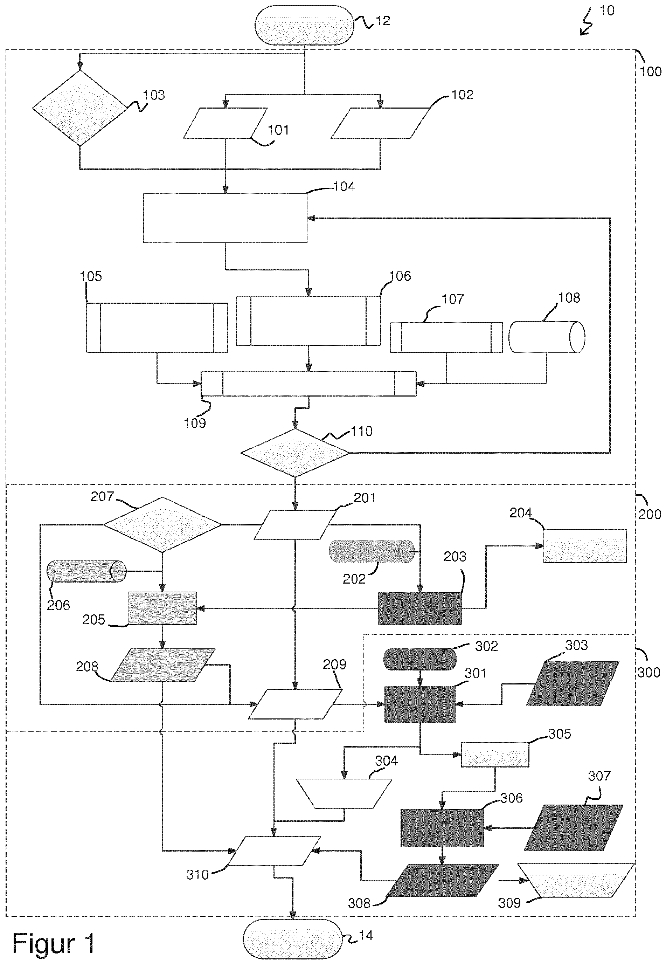

Die Figur 1 zeigt in einem Flussdiagramm einen konventionellen Entwicklungsprozess 10 einer Oberstufe. Bei der Betrachtung des Flussdiagrammes ist dabei zu beachten, dass die jeweilige Funktion durch die geometrische Form des Diagrammelements gekennzeichnet wird. Somit entspricht eine rechteckige Form einer Prozess- bzw. Teilprozessfunktion, eine Rauten-Form einer Entscheidungsfunktion, eine Parallelogramm-Form einer Datenfunktion, eine Trapez-Form einer Fertigungsfunktion und eine Zylinder-Form einer Erfahrungsfunktion. Der Entwicklungsprozess 10 kann zwischen dem Start 12 und dem Ende 14 in drei Hauptbereiche 100, 200, 300 untergliedern werden.
Der erste Schritt 100 des Entwicklungsprozesses 10 betrachtet die Auslegung und manuelle Optimierung der Primärstrukturen einer Oberstufe. Hierbei werden die Materialkennwerte 101, Belastungsfälle und Umweltbedingungen 102, aufgrund der Stufenarchitektur 103 wie beispielsweise die Triebwerkkonfiguration und die Tankkonfiguration, als Inputdaten für ein Architekturmodell 104 verwendet. Die Einflussgrößen sind u.a. Optimierungsvariablen 105 (wie z.B. spezifische Designparameter), Designbeschränkungen 106 (wie z.B. die Festigkeit, Knicksteifigkeit, Fertigung) und Optimierungsziele 107 (wie z.B. die Masse). Dennoch fließen auch die Konstruktionserfahrungen der Mitarbeiter 108 direkt in das strukturelle Design ein und bilden daher ebenso einen Einflussfaktor. Somit wird ein Optimierungsalgorithmus 109 manuell erstellt. Falls die Anforderungen 110 des strukturellen Optimierungsprozesses der Primärkomponente nicht erfüllt werden, kehrt dann der Entwicklungsprozess 10 zu dem Architekturmodell 104 zurück. Wenn aber die Anforderungen 110 des strukturellen Optimierungsprozesses der Primärkomponente erfüllt werden, geht der Entwicklungsprozess 10 zum zweiten Schritt 200 über. Hierbei wird, auf der Basis eines vorläufigen CAD-Modells (Computer Aided Design-Modell) 201 und der Erfahrungen der Mitarbeiter 202 im Bereich der Verkabelung, eine Schätzung zur benötigten Kabelbaumlänge 202 abgegeben. An dieser Stelle werden die Kabel geordert 204. Zusätzlich wird die Verrohrung 205 des Triebwerks mit den Tanks, auf Grundlage der Kabelschätzung 203, der Erfahrungen 206 der Mitarbeiter im Bereich der Verrohrung sowie der Avionik- und Strukturanordnung 207, vorgenommen. Somit wird ein Verrohrungsmodell 208 erstellt, der zu einem erweiterten CAD-Modell 209 beiträgt.
Im dritten Schritt 300 werden die Kabelrouten, unter Berücksichtigung des erweiterten CAD-Modells 209, nach den oben geschilderten Anforderungen verlegt. Insbesondere erfolgt eine erste Verkabelung 301, unter Berücksichtigung der Erfahrungen in Kabelbäume 302 und der vorläufigen elektrischen Schaltpläne 303. Hierbei wird eine Festlegung der Fixierungspunkte zur Fertigung der Sekundärstrukturen 304 und parallel eine Qualifikation 305 der Verkabelung durchgeführt. Somit wird ein vollständiger Flugkabelbaum 306 unter Berücksichtigung der vollständigen elektrischen Schaltpläne 307 und dann ein Verkabelungsmodell 308 generiert, wobei das Verkabelungsmodell 308 für einen Testkabelbaum 309 Anwendung findet. Schließlich wird ein finales CAD-Modell 310 generiert, das zum Ende 14 des Entwicklungsprozesses 10 führt.
Rückschritte sind in dieser Prozessabfolge nur im Problemfall vorgesehen, so kann bspw. die Positionierung einzelner Avionik-Komponenten angepasst werden, wenn eine Verkabelung in der aktuellen Position nicht möglich ist. Eine ganzheitliche Betrachtungsweise der verschiedenen Hauptbereiche, ist jedoch nicht im Prozess integriert.

Im Besonderen zeigt die Figur 1 die Problematik im jetzigen Entwicklungsprozess einer Oberstufe in Bezug auf die Bereiche Verrohrung des "Propulsion Systems", Verkabelung der Avionik sowie der sonstigen elektronischen Komponenten und zuletzt auch in Bezug auf das strukturelle Design von Primär- und Sekundärstrukturen. Die sequenzielle Abfolge der Designschritte ist für eine massenoptimierte Oberstufenentwicklung nicht geeignet, da die getrennte und sequentielle Betrachtungsweise von Struktur, Verrohrung und Verkabelung eine optimierte Auslegung beschränkt.

Es ist daher die Aufgabe der Erfindung, einen Entwicklungsprozess anzugeben, welcher die obengenannten Probleme beseitigt bzw. zumindest verringert.

Diese Aufgabe wird durch einen bionischen Entwicklungsprozess mit den Merkmalen des Anspruchs 1 gelöst. Zweckmäßige Fortbildungen des Erfindungsgedankens sind Gegenstand der abhängigen Ansprüche.

Der erfindungsgemäße bionische Entwicklungsprozess eines Bauteils umfasst das Definieren einer Bauteilentwicklungssprache bestehend aus einem Regelwerk. Dieses Regelwerk entspricht insbesondere parallel eingefügten Inputparametern, die in logische Regelprozesse übersetzt werden. Die Inputparameter weisen hierbei die Anforderungen aus verschiedenen Bereichen auf. Der bionische Entwicklungsprozess umfasst ferner das Erstellen eines Bauteilgrundmodells aus dem Regelwerk (der Bauteilentwicklungssprache) durch einen Softwaretool, das ganzheitliche Optimieren des Bauteilgrundmodells auf Grundlage von Optimierungszielsetzungen und das automatische Generieren eines Bauteilentwurfes. Außerdem umfasst der erfindungsgemäße bionische Entwicklungsprozess das Simulieren und Qualifizieren des Bauteilentwurfes und das Prüfen des Bauteilentwurfes.

Eine solche ganzheitliche Betrachtungsweise führt zu Optimierungsmöglichkeiten, die sich insbesondere auf das Massenbudget auswirken. Ferner werden vereinzelt funktionale Performance-Steigerungen erreicht, wie z.B. durch bionisch optimierte Bogenführungen der Rohrleitungen. Als zentraler Vorteil ist jedoch die Beschleunigung des Entwicklungsprozesses zu nennen. Durch die vollständige Digitalisierung und Automatisierung des Designprozesses können beispielsweise verschiedene Varianten in kürzester Zeit generiert werden. Dies beschleunigt die Vorauslegung sowie die Implementierung nachträglicher Änderungen der Anforderungen enorm. Insgesamt kann der erfindungsgemäße Entwicklungsprozess durch die Optimierungsschritte nachhaltig verbessert werden.

Der bionische Entwicklungsprozess eines Bauteils gemäß der vorliegenden Erfindung kann allgemein und industrieübergreifend zur Produktenentwicklung komplexer Systeme beitragen. Unmittelbare Anwendungsbereiche liegen in der Entwicklung von Ariane 6 und nachfolgenden Launcher-Generationen sowie in der Luftfahrt.

In einer Ausführungsform der Erfindung umfasst der Entwicklungsprozess ferner das iterative Anpassen der Bauteilentwicklungssprache bzw. der Optimierungszielsetzungen als Folge aus dem Prüfen des Bauteilentwurfes zur Generierung eines neuen Bauteilentwurfs. Dies ermöglicht eine kontinuierliche Anpassung der Inputparameter und/oder der Optimierungszielsetzungen, falls der Prüfungsschritt nicht bestanden würde. Somit wird durch eine Art von Lernprozess der Entwicklungsprozess in Echtzeit verbessert.

Im Besonderen entspricht das entwickelte Bauteil des erfindungsgemäßen Prozesses einer Oberstufe einer Rakete, während die verschiedenen Bereiche der strukturellen Gestaltung, der Verrohrung und der Verkabelung des Bauteils entsprechen. Insbesondere entsprechen diese Bereiche dem strukturellen Design von Primär- und Sekundärstrukturen der Oberstufe, der Verrohrung des Triebwerks/Tanks der Oberstufe und der Verkabelung der Avionik sowie der sonstigen elektronischen Komponenten der Oberstufe.

In einer weiteren Ausführungsform der Erfindung, weisen die Inputparameter praktische Gestaltungserfahrungen in den verschieden Bereichen auf. Somit werden der praktischen Erfahrungen digitalisiert und für die Entwicklung des Bauteils genutzt. Hierdurch können die Mitarbeitererfahrungen zumindest teilweise dokumentiert und gesichert werden.

Außerdem können die Inputparameter die Gestaltungsrichtlinien zur Bauteilproduktion aufweisen. Somit werden auch die üblichen externen Einflüsse, wie zum Beispiel die Materialkennwerte, die Belastungsfälle, die Umweltbedingungen, usw. in Betracht gezogen.

In einer Ausführungsform der Erfindung, erfolgt das Erstellen des Bauteilgrundmodells unter Berücksichtigung von Hauptparametern (wie z.B. die Triebwerk- oder die Tankkonfiguration), elektrischen Schaltplänen und sonstigen Anforderungen. Somit wird ein vollständiges Grundmodell erstellt.

Außerdem weisen die im erfindungsgemäßen bionischen Entwicklungsprozess verwendeten Optimierungszielsetzungen, die Optimierung für die strukturelle Gestaltung, für die Verrohrung und für die Verkabelung des Bauteils auf. Für jede Struktur im Bauteil wird eine Geometrieübertragung und eine Netzgenerierung durchgeführt. Danach wird durch eine Berechnung, eine Topologiebewertung erstellt. Somit kann die gesamte Optimierung des Grundmodells, alle konstruktive Aspekte des Bauteils berücksichtigen. Gleichzeitig wird eine Routenoptimierung für die Verrohrung und die Verkabelung durchgeführt.

In einer weiteren Ausführungsform der Erfindung dienen die Anforderungen aus verschiedenen Bereiche als Randbedingungen für einen Topologieoptimierungsprozess. Hierbei gilt es die Summe aller Anforderungen als Input für eine parallele Designentwicklung zu verwenden und so die Struktur, Verkabelung und Verrohrung sowie deren Befestigungen für die Oberstufe in einem generischen Strukturaufbau parallel zu entwickeln. Dieser Aufbau beruht dabei auf Grundlage bionischer Topologieansätze und mathematischen Optimierungsalgorithmen. So können bspw. Triebwerk- und Tankstrukturen sowie thermische Randbedingungen als Inputparameter für die parallele Generierung einer bionischen multifunktionalen Versorgungsstruktur genutzt werden. Diese Struktur kann nach mehreren Gesichtspunkten optimiert werden. Die elektrischen Leitungen können zum Beispiel längen- und/oder gewichtsoptimiert verlegt werden. Die Verrohrung kann beispielerweise in Bezug auf minimale Biegeradien, optimierter Druckverlust oder minimale Rohrlänge vorgenommen werden. Die dafür benötigten Primär- und Sekundärstrukturen werden entsprechend ihrer Lasten und Lagerpunkte in Hinblick auf ihre Topologie optimiert. Mit anderen Worten, die Struktur, Elektrik, Verrohrung etc. werden generisch bzw. parallel aufgebaut. Es erfolgt keine Einzelbetrachtung, sondern die einzelnen Systeme werden gleichzeitig unter einem permanenten Abgleich zu einem selbstdefinierten Gesamtsystem aufgebaut. Der erfindungsgemäße Prozess bzw. das erfindungsgemäße Verfahren sucht eigene Wege um einen Bauteilentwurf zu erstellen, es werden lediglich Randbedingungen vorgegeben. Der Bauteilentwurf definiert sich quasi selbst. Details können später nach der Erstellung optimiert werden.

In einer Ausführungsform der Erfindung erfolgt das Optimieren des Bauteilmodells in verschiedenen Detailgraden, um zu verschiedenen Zeitpunkten im Gesamtentwicklungsprozess eine Grob- bzw. Detailauslegung unter Berücksichtigung der Inputparameter zu generieren.

Vorteile und Zweckmäßigkeiten der Erfindung ergeben sich im Übrigen aus der nachfolgenden Beschreibung ausgewählter Ausführungsbeispiele anhand der Figuren. Von diesen zeigen:
- Fig. 1: einen Flussdiagramm eines konventionellen Entwicklungsprozesses eines Bauteils gemäß dem Stand der Technik, und
- Fig. 2: einen Flussdiagramm eines bionischen Entwicklungsprozesses eines Bauteils gemäß einer Ausführungsform der Erfindung.

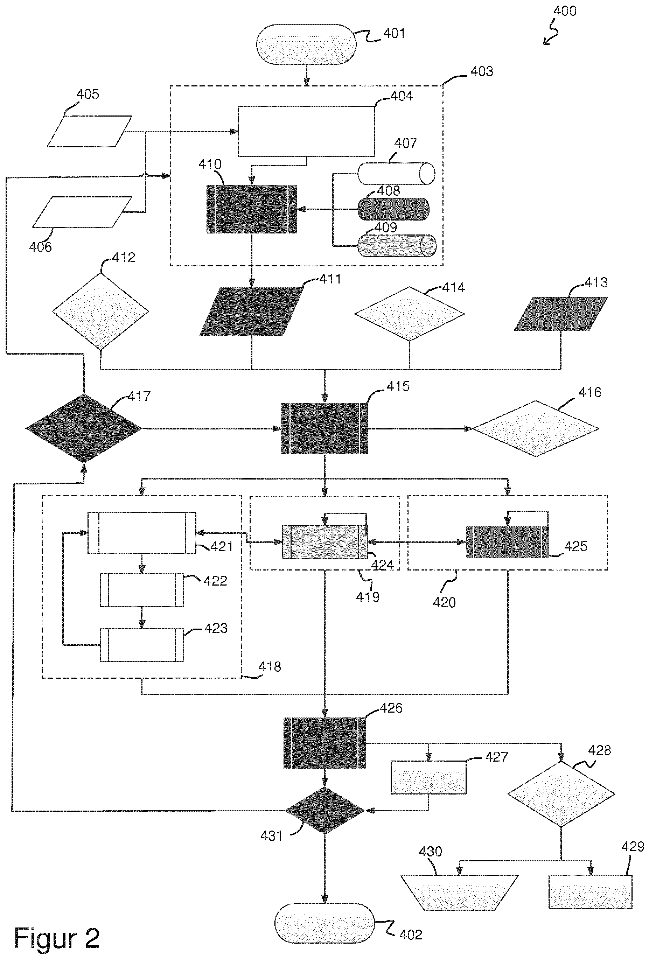

Die Figur 2 beschreibt in einem Flussdiagramm einen bionischen Entwicklungsprozess 400 eines Bauteils, welcher sich zwischen einem Start 401 und einem Ende 402 gliedert. Hierbei wird die Funktion jedes Flussdiagrammelements durch ihre geometrische Form dargestellt, wie in Figur 1.

Zunächst wird eine Bauteilentwicklungssprache definiert 403. Es wird definiert, wie vorzugehen ist. Hierzu wird eine wissensbasierte Datenbank als Voraussetzung für ein selbstdefinierendes Gesamtsystem generiert. Als Inputparameter werden ein Architekturmodell 404, das auf die externen Anforderungen, wie Materialkennwerte 405 und Belastungs- und Umweltkonfiguration 406, und Erfahrungen der Mitarbeiter im Bereich der strukturellen Gestaltung 407, der Verkabelung 408, und der Verrohrung 409 in Betracht gezogen. Diese Inputparameter werden gleichzeitig verwendet und in eine graphenbasierte Entwurfssprache 410 übersetzt. Somit wird eine Bauteilentwicklungssprache 411 generiert, die u.a. aus einen Regelwerk besteht, welches die praktischen Gestaltungsrichtlinien 405, 406 und -erfahrungen 407, 408, 409 - übersetzt in logische Regelprozesse - widerspiegelt.

Aus dieser Regelbasis heraus erstellt ein Softwaretool, unter Berücksichtigung der Hauptparameter 412 (z.B. die Triebwerkkonfiguration und Tankkonfiguration), elektrischer Schaltpläne 413 und sonstiger Anforderungen 414, ein Bauteilgrundmodell 415. Durch dieses Modell 415 wird die Avionik- und Strukturanordnung 416 definiert.

Im weiteren Prozess wird das Bauteilgrundmodell 415 softwaretechnisch auf Grundlage von Optimierungszielsetzungen 417 ganzheitlich optimiert. Das Optimierungsziel betrifft u.a. die Masse, die Volumen bzw. die Lage verschiedener Elemente des Bauteils.

In Besonderen teilt sich der Optimierungsschritt in drei parallele Prozesse: ein Optimierungsprozess für die Strukturen 418, ein Optimierungsprozess für die Verrohrung 419 und ein Optimierungsprozess für die Verkabelung 420. Im Optimierungsprozess für die Strukturen 418, wird für jede Struktur im Bauteil eine Geometrieübertragung und eine Netzgenerierung 421 durchgeführt. Danach wird durch eine Berechnung 422 eine Topologiebewertung 423 erstellt. Gleichzeitig wird eine Routenoptimierung für die Verrohrung 424 und die Verkabelung 425 durchgeführt. Alle diese Optimierungsprozesse 418, 419 und 420, werden parallel zur automatischen Generierung eines Bauteilentwurfs 426 benutzt.
Nach der automatischen Generierung des Bauteilentwurfs, erfolgen Simulations- und Qualifikationsprozesse 427, welche die Grundlage für die menschliche Bewertung der erzeugten Lösung bilden. Parallel dazu wird eine Designfestlegung 428 des Bauteils durchgeführt, die zum Einkauf 429 der notwendigen Teile und zur Fertigung 430 des Bauteils führt.

Nach dem Simulations- und Qualifikationsprozess 427, wird der Bauteilentwurf geprüft 431. Falls der Bauteilentwurf die gesamte Anforderungen bestanden hat, endet der Entwicklungsprozess 20. Falls dagegen der Bauteilentwurf diese Anforderungen nicht besteht, werden die Optimierungsziele 417 an die neuen erweiterten Anforderungen angepasst und/oder neue Regeln zur Definierung 403 einer geänderten Entwicklungssprache eingefügt. Diese iterative Prozessauslegung, ermöglicht schnell neue Bauteilentwürfe zu generieren.

Die Ausführung der Erfindung ist nicht auf die oben beschriebenen Beispiele und hervorgehobenen Aspekte beschränkt, sondern ebenso in einer Vielzahl von Abwandlungen möglich, die im Rahmen fachgemäßen Handelns liegen.

Offenbart ist ein bionischer Entwicklungsprozess eines Bauteils, umfassend das Definieren einer Bauteilentwicklungssprache bestehend aus einem Regelwerk, welches parallel eingefügten Inputparametern entspricht, die in logische Regelprozesse übersetzt werden, wobei die Inputparameter die Anforderungen aus verschiedenen Bereiche aufweisen, das Erstellen eines Bauteilgrundmodells aus dem Regelwerk durch ein Softwaretool, das ganzheitliche Optimieren des Bauteilgrundmodells auf Grundlage von Optimierungszielsetzungen, das automatische Generieren eines Bauteilentwurfes, das Simulieren und Qualifizieren des Bauteilentwurfes und das Prüfen des Bauteilentwurfes.

### Bezugszeichenliste

- 10: Konventioneller Entwicklungsprozess
- 12: Start des konventionellen Entwicklungsprozesses
- 14: Ende des konventionellen Entwicklungsprozesses
- 100: Erster Schritt des konventionellen Entwicklungsprozesses
- 101: Materialkennwerte
- 102: Belastungsfälle und Umweltbedingungen
- 103: Stufenarchitektur
- 104: Architekturmodell
- 105: Optimierungsvariablen
- 106: Designbeschränkungen
- 107: Optimierungsziele
- 108: Konstruktionserfahrung
- 109: Optimierungsalgorithmus
- 110: Anforderungen
- 200: Zweiter Schritt des konventionellen Entwicklungsprozesses
- 201: CAD-Modell
- 202: Erfahrung im Bereich der Verkabelung
- 203: Kabelschätzung
- 204: Einkauf
- 205: Verrohrung
- 206: Erfahrung im Bereich der Verrohrung
- 207: Avionik-Positionierung
- 208: Verrohrungsmodell
- 209: erweitertes CAD-Modell
- 300: Dritter Schritt des konventionellen Entwicklungsprozesses
- 301: erste Verkabelung
- 302: Erfahrung in Kabelbäume
- 303: vorläufige elektrische Schaltpläne
- 304: Fertigung der Sekundärstrukturen
- 305: Qualifikation
- 306: vollständiger Flugkabelbaum
- 307: vollständige elektrische Schaltpläne
- 308: Verkabelungsmodell
- 309: Testkabelbaum
- 310: finales CAD-Modell
- 400: Bionischer Entwicklungsprozess
- 401: Start des bionischen Entwicklungsprozesses
- 402: Ende des bionischen Entwicklungsprozesses
- 403: Definition der Bauteilentwicklungssprache
- 404: Architekturmodell
- 405: Materialkennwerte
- 406: Belastungs- und Umweltkonfiguration
- 407: Erfahrung im Bereich der strukturellen Gestaltung
- 408: Erfahrung im Bereich der Verkabelung
- 409: Erfahrung im Bereich der Verrohrung
- 410: Übersetzung in Entwicklungssprache
- 411: Bauteilentwicklungssprache
- 412: Stufenarchitektur (Triebwerk, Tanks,...)
- 413: elektrische Schaltpläne
- 414: sonstige Anforderungen
- 415: Bauteilgrundmodell
- 416: Avionik-Positionierung
- 417: Optimierungsziele
- 418: Optimierungsprozess für die Strukturen
- 419: Optimierungsprozess für die Verrohrung
- 420: Optimierungsprozess für die Verkabelung
- 421: Geometrieübertragung und Netzgenerierung
- 422: Berechnung
- 423: Topologiebewertung
- 424: Routenoptimierung für die Verrohrung
- 425: Routenoptimierung für die Verkabelung
- 426: Bauteilentwurf
- 427: Simulations- und Qualifikationsprozess
- 428: Designfestlegung
- 429: Einkauf
- 430: Fertigung
- 431: Prüfung

## Patentansprüche

1. Bionischer Entwicklungsprozess (20) eines Bauteils, umfassend:
- Definieren einer Bauteilentwicklungssprache (403) bestehend aus einem Regelwerk, welches parallel eingefügten Inputparametern (404, 405, 406, 407, 408, 409) entspricht, die in logische Regelprozesse übersetzt (410) werden, wobei die Inputparameter (404, 405, 406, 407, 408, 409) die Anforderungen aus verschiedenen Bereichen aufweisen;
- Erstellen eines Bauteilgrundmodells (415) aus dem Regelwerk durch ein Softwaretool;
- ganzheitliches Optimieren (418, 419, 420) des Bauteilgrundmodells auf Grundlage von Optimierungszielsetzungen;
- automatisches Generieren (426) eines Bauteilentwurfes;
- Simulieren und Qualifizieren (427) des Bauteilentwurfes; und
- Prüfen (431) des Bauteilentwurfes.

2. Entwicklungsprozess nach Anspruch 1, ferner umfassend:
- iteratives Anpassen der Bauteilentwicklungssprache bzw. der Optimierungszielsetzungen als Folge aus dem Prüfen (431) des Bauteilentwurfes, zur Generierung eines neuen Bauteilentwurfes.

3. Entwicklungsprozess nach einem der vorhergehenden Ansprüche, wobei das Bauteil einer Oberstufe einer Rakete entsprechen kann.

4. Entwicklungsprozess nach einem der vorhergehenden Ansprüche, wobei die verschiedenen Bereiche, wie die strukturelle Gestaltung, die Verrohrung und die Verkabelung des Bauteils aufweisen.

5. Entwicklungsprozess nach einem der vorhergehenden Ansprüche, wobei die Inputparameter praktische Gestaltungserfahrungen (407, 408, 409) in den verschieden Bereichen aufweisen.

6. Entwicklungsprozess nach einem der vorhergehenden Ansprüche, wobei die Inputparameter ferner Gestaltungsrichtlinien zur Bauteilproduktion (404, 405, 406) aufweisen.

7. Entwicklungsprozess nach einem der vorhergehenden Ansprüche, wobei das Erstellen des Bauteilgrundmodells (415) unter Berücksichtigung von Hauptparametern (412), elektrischen Schaltplänen (413) und sonstigen Anforderungen (414) erfolgt.

8. Entwicklungsprozess nach einem der vorhergehenden Ansprüche, wobei die Optimierungszielsetzungen, die Optimierung für die strukturelle Gestaltung (418), für die Verrohrung (419) und für die Verkabelung (420) des Bauteils aufweisen.

9. Entwicklungsprozess nach einem der vorhergehenden Ansprüche, wobei die Anforderungen aus verschiedenen Bereichen als Randbedingungen für einen Topologieoptimierungsprozess dienen.

10. Entwicklungsprozess nach einem der vorhergehenden Ansprüche, wobei das Optimieren des Bauteilmodells (418, 419, 420) in verschiedenen Detailgraden erfolgt, um zu verschieden Zeitpunkten im Gesamtentwicklungsprozess eine Grob- bzw. Detailauslegung unter Berücksichtigung der Inputparameter (404, 405, 406, 407, 408, 409) zu generieren.
